# EUROPEAN PATENT APPLICATION

(11) **EP 4 707 966 A1**
(43) Date of publication of application: **11.03.2026**
(21) Application number: 24914919.6
(22) Date of filing: 29.09.2024
(51) Int. Cl.: G05B 19/042

(54) **TURNOUT SNOW-MELTING CONTROL SYSTEM AND METHOD**

(30) Priority: 05.01.2024 CN 202410022000
(71) Applicant: CRSC Research & Design Institute Group Co., Ltd., Beijing 100070 (CN)
(72) Inventor: SUI, Zheng, Beijing 100070 (CN); YANG, Jin, Beijing 100070 (CN); LI, Zhongming, Beijing 100070 (CN); YU, Long, Beijing 100070 (CN); ZHAO, Danxu, Beijing 100070 (CN); ZHANG, Da, Beijing 100070 (CN); LI, Wei, Beijing 100070 (CN); SU, Rui, Beijing 100070 (CN); LI, Jingchun, Beijing 100070 (CN); GUAN, Huifang, Beijing 100070 (CN)
(74) Representative: Samson & Partner Patentanwälte mbB
(86) International application number: PCT/CN2024/122328
(87) International publication number: WO 2025/145698

(57) **Abstract**

The present disclosure belongs to the technical field of rail transit, and provides a switch snow-melting control system and method. The system includes a communication module, a control module, and a collection module; the control module is provided with a CAN interface for information transmission and relay between a plurality of control modules, and the control module is connected to a plurality of collection modules; the communication module is configured to receive a command sent by a control terminal to the control module, and send the command to the control module; the communication module includes a dial switch for switching a communication protocol between the control terminal and the communication module; the control module is configured to control an alternating-current contactor in each heating circuit based on the received command; and the collection module is configured to send collected current information of each heating circuit, state information of the alternating-current contactor and state information of a circuit breaker to the control module. The present disclosure is compatible with existing standard switch snow-melting hardware systems, thus simplifying replacement of modules.

## Description

### TECHNICAL FIELD

The present disclosure belongs to the technical field of rail transit, and particularly relates to a switch snow-melting control system and method.

### BACKGROUND ART

The switch snow-melting system has multiple functions, mainly including: a system parameter configuration function, a multi-mode control function, an input/output function, an interface function, and an emergency heating function.

The existing switch snow-melting control system cannot meet the compatibility and expansion requirements of rail transit for all equipment. The requirements include:
Compatibility requirements: there are two types of control module boards in the current switch snow-melting system, namely, a pluggable control board and an integrated control board developed based on an AVR single-chip microcomputer. The integrated control board is further divided into two versions, and the three modules are incompatible with each other, such that re-shipment and reconfiguration are required in case of damage.

Expansion requirements: currently, the switch snow-melting system includes eight circuit breakers and eight alternating-current contactors, and is capable of outputting currents of twenty-four circuits, and if more circuits need to be controlled, expansion can only be achieved by adding snow-melting control cabinets.

Data timeliness and reliability processing requirements: the switch snow-melting system collects state information of all electric heating elements at each station or along a line, where the number of collection points for all switches needs to be increased by several hundred per station and by thousands for the entire line, and meanwhile, to ensure normal transition of switches and safe high-speed operation of trains under rainy and snowy weather in winter, the system has a high collection frequency, resulting in a large amount of data generated in a short time. The switch snow-melting system should be capable of fast transmission, storage, and reliable processing of such data according to their characteristics.

Maintainability assurance: to meet the requirements for safe high-speed operation of trains and normal transition of switches without being affected by snow accumulation and icing under rainy and snowy weather in winter, it is needed to ensure equipment quality while more accurately monitoring state information of electric heating elements, thereby ensuring that the operating state of the electric heating elements can be timely and accurately fed back to an indoor maintenance terminal, and enabling an equipment maintenance unit to timely and accurately grasp their operating state.

In summary, due to the incompatibility between current hardware devices, the existing switch snow-melting control systems require identifying the device model first before conducting specialized replacement when a device malfunctions. This not only makes installation, maintenance and other work inconvenient but also increases time costs and labor costs.

### SUMMARY

In view of the above problems, the present disclosure provides a switch snow-melting control system and method, adopting the following technical solutions:
A switch snow-melting control system includes a communication module, a control module, and a collection module, where the control module is provided with a CAN interface for information transmission and relay between a plurality of control modules, and the control module is connected to a plurality of collection modules; the communication module is configured to receive a command sent by a control terminal to the control module, and send the command to the control module; the communication module includes a dial switch for switching a communication protocol between the control terminal and the communication module; the control module is configured to control an alternating-current contactor in each heating circuit based on the received command to control activation and deactivation of an electric heating strip; and the collection module is configured to send collected current information of each heating circuit, state information of the alternating-current contactor and state information of a circuit breaker to the control module.

Further, the communication module further includes a first RS232 interface, a remote RS232 interface, a first DS18B20 interface, a first CAN interface, and a TCP/IP interface,
where the communication module is connected to the control terminal via the first RS232 interface, the remote RS232 interface, or the TCP/IP interface, the first DS18B20 interface is configured to transmit an internal temperature signal from a control cabinet, which is sent by the control module, back to the control terminal, the first CAN interface is connected to the control module, and the communication module sends the command from the control terminal to the control module via the first CAN interface.

Further, the control module is configured with a rotary dial address-setting function, and the dial switch is used to set address information of the control module and configure a CAN bus.

Further, the control module includes a second CAN interface, a third CAN interface, twelve DO interfaces, a second DS18B20 interface, a third DS18B20 interface, a second RS485 interface, and a third RS485 interface,
where the second CAN interface is configured to receive the command sent by the control terminal to the control module from the communication module; the third CAN interface is configured to perform information transmission and relay between the plurality of control modules; the twelve second DO interfaces are configured to control alternating-current contactors in twelve heating circuits; the second DS18B20 interface is externally connected to a track temperature transmitter and is configured to monitor a track temperature; the third DS18B20 interface is connected to a track temperature sensor and is configured to detect an internal temperature of the control cabinet; the second RS485 interface is connected to the plurality of collection modules; and the third RS485 interface is connected to an external electric meter and is configured to collect a three-phase current and a three-phase voltage and display the three-phase current and the three-phase voltage in the control cabinet.

Further, the control module further includes four first DI interfaces, two first DO interfaces, three first AD interfaces, and four second AD interfaces,
where the four first DI interfaces are configured to collect states of access control and three-position control switches; the two first DO interfaces are configured to implement a display function of an indicator light for the control module; the three first AD interfaces are configured to collect a current/voltage; and the four second AD interfaces are configured to collect the three-phase voltage, a DI state determined in a resistance simulation network, and temperatures of two 4-20 mA temperature sensors.

Further, the control module further includes an AC220 power input interface and a 24 V voltage output interface,
where the control module converts a 220 V AC voltage input from the AC220 power input interface into a 24 V voltage and outputs the 24 V voltage externally via the 24 V voltage output interface.

Further, the collection module includes a fourth RS485 interface, eight second DI interfaces, and twelve third AD interfaces,
where the eight second DI interfaces are configured to collect state information of the alternating-current contactors and state information of circuit breakers;
the twelve third AD interfaces are connected to Hall sensors or current transmitters to collect current information of the twelve heating circuits; and
the plurality of collection modules are also capable of being connected to the second RS485 interface of the control module via the fourth RS485 interface, and the fourth RS485 interface is configured to send the current information of the twelve heating circuits, the state information of the alternating-current contactors, and the state information of the circuit breakers to the control module.

Further, the collection module further includes two 0-1 dial switches, and the collection module is configured with an 8-bit rotary dial address-setting function.

Further, the control module is further configured to collect an internal temperature of a control cabinet, a three-phase current, a three-phase voltage, and a track temperature, and send the control cabinet, the three-phase current, the three-phase voltage, and the track temperature to the control terminal for display via the communication module; and
the control module is further configured to send response information of the control module, the current information of each heating circuit, the state information of the alternating-current contactor, and the state information of the circuit breaker to the control terminal for display via the communication module.

Further, the communication module, the control module, and the collection module all adopt STM32 single-chip microcomputers.

The present disclosure further provides a switch snow-melting control method, including the following steps:
receiving, by a communication module, a command sent by a control terminal to a control module, and sending the command to the control module, where the communication module includes a dial switch for switching a communication protocol between the control terminal and the communication module;
controlling, by the control module, an alternating-current contactor in each heating circuit based on the received command to control activation and deactivation of an electric heating strip; and
sending, by the collection module, collected current information of each heating circuit, state information of the alternating-current contactor and state information of a circuit breaker to the control module,
where the control module is provided with a CAN interface for information transmission and relay between a plurality of control modules, and the control module is connected to a plurality of collection modules.

The present disclosure has the following beneficial effects:
1. While forming a self-contained system, the present disclosure is compatible with existing standard switch snow-melting hardware systems by changing built-in dial addresses, thus simplifying replacement of modules.
2. By adding interfaces such as CAN bus and RS485 to each module, the present disclosure simplifies the difficulty of system development and usage, and enhances the practicality and expandability of the hardware system. While enabling efficient development of product functions, the present disclosure not only shortens the time for system troubleshooting, but also lowers labor costs and improves the overall maintenance efficiency of the hardware system.

Other features and advantages of the present disclosure will be described in the following specification, and will become apparent in part from the specification, or will be understood by implementing the present disclosure. The objective and other advantages of the present disclosure may be achieved and obtained through the structures indicated in the specification and the accompanying drawings.

### BRIEF DESCRIPTION OF THE DRAWINGS

To more clearly illustrate the technical solutions in the embodiments of the present disclosure or in the prior art, the accompanying drawings that need to be used in the description of the embodiments or the prior art will be briefly described below. Apparently, the accompanying drawings in the description below merely illustrate some embodiments of the present disclosure. Those of ordinary skill in the art may also derive other accompanying drawings from these accompanying drawings without creative efforts.
FIG. 1 shows a schematic structural diagram of a switch snow-melting control system according to an embodiment of the present disclosure;
FIG. 2 shows a schematic diagram of communication between a switch snow-melting control system and a control terminal according to an embodiment of the present disclosure;
FIG. 3 shows a schematic structural diagram of a communication system according to an embodiment of the present disclosure;
FIG. 4 shows a schematic structural diagram of a control module according to an embodiment of the present disclosure; and
FIG. 5 shows a schematic structural diagram of a collection module according to an embodiment of the present disclosure.

In the drawings: 1: control terminal; 2: communication module; 3: control module; and 4: collection module.

### DETAILED DESCRIPTION

To make the objectives, technical solutions and advantages of the embodiments of the present disclosure clearer, the technical solutions in the embodiments of the present disclosure will be clearly and completely described below with reference to the accompanying drawings in the embodiments of the present disclosure. Apparently, the described embodiments are some rather than all of the embodiments of the present disclosure. All other embodiments obtained by those of ordinary skill in the art based on the embodiments in the present disclosure without creative efforts shall fall within the scope of protection of the present disclosure.

It should be noted that the terms "first", "second", etc. in the present application are used to distinguish similar objects and are not necessarily used to describe a particular order or sequence.

An embodiment of the present disclosure provides a switch snow-melting control system and method, which fully consider space and cables in existing equipment, increase the number of interfaces on each module without adding extra supporting equipment, facilitate module expansion, enable overall upgrade and transformation of an existing hardware system, and solve the problems of aging, poor maintainability, and difficult scalability of the existing system.

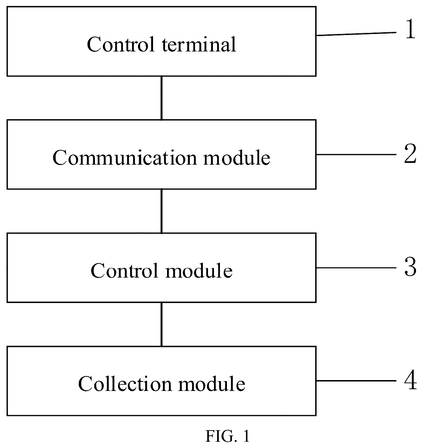

As shown in FIG. 1, a switch snow-melting control system includes a communication module 2, a control module 3, and a collection module 4. The communication module 2, the control module 3, and the collection module 4 all adopt STM32 single-chip microcomputers, enabling overall upgrade and transformation of the existing hardware systems.

The communication module 2 is configured to receive a command sent by a control terminal 1 to the control module 3, send the command to the control module 3, receive response information transmitted back from the control module 3, and send the response information to the control terminal 1 for display.

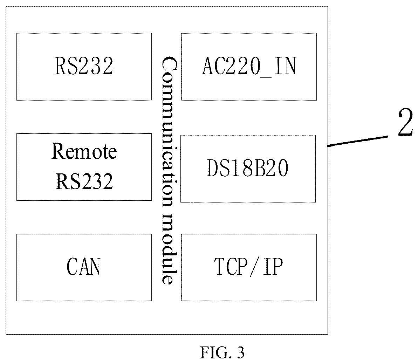

As shown in FIG. 3, for example, the communication module 2 includes a first RS232 interface, an AC220 power input interface, a remote RS232 interface, a first DS18B20 interface, a dial switch, a first CAN interface, and a TCP/IP interface.

The communication module 2 is connected to the control terminal 1 via the first RS232 interface, the remote RS232 interface, or the TCP/IP interface. The dial switch is configured to switch a communication protocol between the control terminal 1 and the communication module 2. The control terminal 1 communicates with the communication module 2 via an RS232 protocol or a TCP/IP protocol. The command sent by the control terminal 1 is transmitted to the communication module 2 via the RS232 protocol or the TCP/IP protocol, thereby ensuring compatibility with the existing module that transmits the command via the RS232 and TCP/IP protocols. The RS232 protocol or the TCP/IP protocol can be switched and controlled via the dial switch.

The first DS18B20 interface is configured to transmit an internal temperature signal from a control cabinet, which is sent by the control module 3, back to the control terminal 1. The first CAN interface is connected to the control module 3. The communication module 2 sends the command from the control terminal 1 to the control module 3 via the first CAN interface.

The control module 3 is configured to control (close or open) an alternating-current contactor in a heating circuit to control activation and deactivation of an electric heating strip. When the electric heating strip is activated, a track at a front part of a switch is heated to a certain temperature, thereby achieving the purpose of snow melting. The control module 3 is further configured to collect an internal temperature of a control cabinet, a three-phase current, a three-phase voltage, and a track temperature, and send the control cabinet, the three-phase current, the three-phase voltage, and the track temperature to the control terminal 1 for display via the communication module 2.

The control module 3 is provided with a CAN interface for information transmission and relay between a plurality of control modules 3, and the control module 3 is connected to a plurality of collection modules 4.

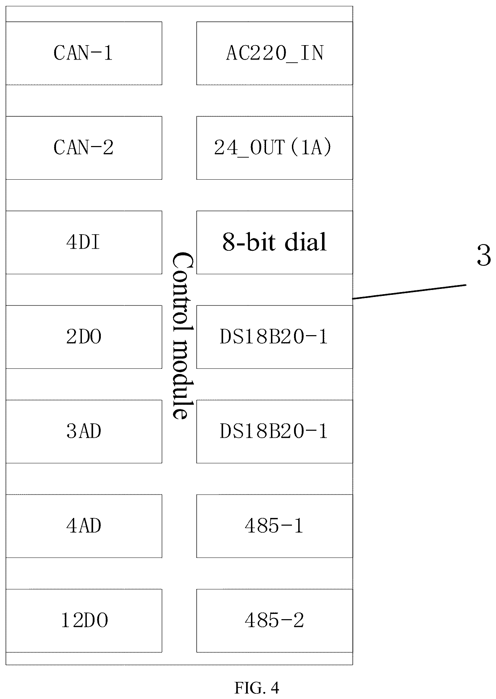

As shown in FIG. 4, for example, the control module 3 includes a second CAN interface, a third CAN interface, an AC220 power input interface, a 24 V voltage output interface, four first DI interfaces, two first DO interfaces, three first AD interfaces, four second AD interfaces, twelve second DO interfaces, a second DS18B20 interface, a third DS18B20 interface, a second RS485 interface, and a third RS485 interface. The control module 3 is configured with an 8-bit rotary dial address-setting function, or with two 10-bit rotary dial address-setting functions. The dial switch can be used to set address information of the control module 3 and configure a CAN bus.

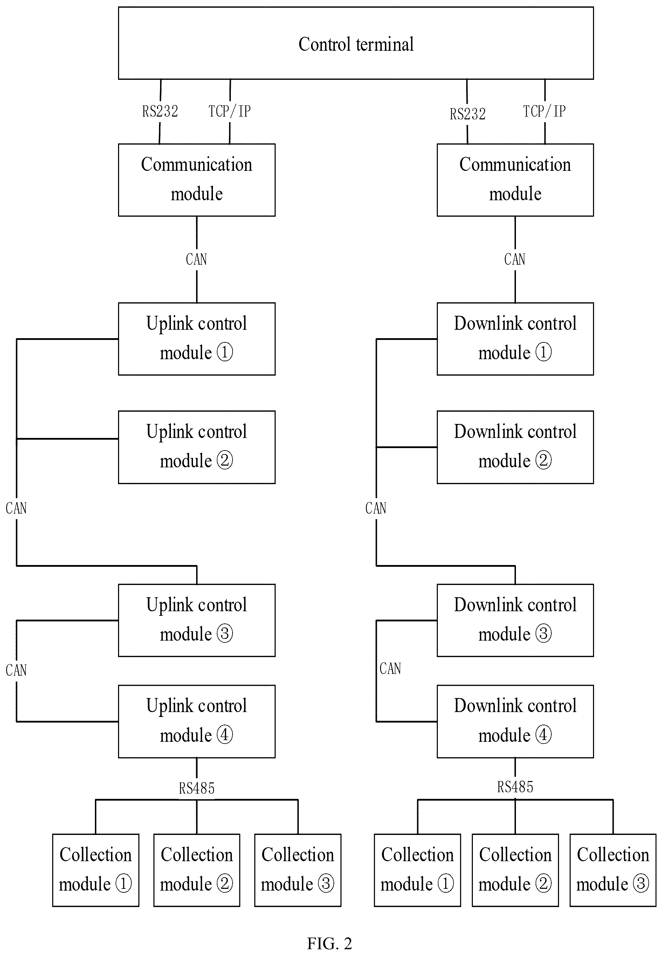

The second CAN interface is configured to perform data transmission. Specifically, the second CAN interface is configured to receive the command sent by the control terminal 1 to the control module 3 from the communication module 2. The third CAN interface is configured to perform information transmission and relay between the plurality of control modules 3. As shown in FIG. 2, for example, when a transmission distance is greater than 3 km, long-distance information transmission is performed using the plurality of control modules 3. For example, the control terminal 1 is connected to four uplink control modules 3 via one communication module 2 and is connected to four downlink control modules 3 via the other communication module 2, each control module 3 is connected via the third CAN interface, the four uplink control modules 3 perform information transmission and relay via the third CAN interface, and the four downlink control modules 3 perform information transmission and relay via the third CAN interface.

The four first DI interfaces are configured to collect states of access control and three-position control switches. The two first DO interfaces are configured to implement a display function of an indicator light for the control module 3.

To ensure compatibility with various standard switch snow-melting systems and provide a function of forming a self-contained system, the three first AD interfaces are configured to collect a current/voltage and can implement a function of a track temperature transmitter, and the four second AD interfaces are configured to collect the three-phase voltage, a DI state determined in a resistance simulation network, and temperatures of two 4-20 mA temperature sensors.

The twelve second DO interfaces are configured to control alternating-current contactors in twelve heating circuits. When the alternating-current contactor is closed, the electric heating strip in the heating circuit is activated to heat the track at the front part of the switch. Thus, the number of drivers for circuit breakers and the alternating-current contactors are increased to twelve.

The control module 3 converts a 220 V AC voltage input from the AC220 power input interface into a 24 V voltage, and outputs the 24 V voltage externally via the 24 V voltage output interface to supply power to other modules.

The second DS18B20 interface is externally connected to a track temperature transmitter and is configured to monitor a track temperature. The third DS18B20 interface is connected to a track temperature sensor and is configured to detect an internal temperature of the control cabinet.

The second RS485 interface is connected to the plurality of collection modules 4, enabling expansion of the collection modules 4. For example, the control module 3 is connected to three collection modules 4 via the second RS485 interface. The third RS485 interface is connected to a three-phase electric meter and is configured to collect a three-phase current and a three-phase voltage and display the three-phase current and the three-phase voltage in the control cabinet.

The control module 3 receives the command transmitted from the communication module 2, sends the command to each module, collects the response information after execution of the command by each device, and transmits the response information back to the communication module 2 via the first CAN interface, thereby achieving overall control of the system and information monitoring of each device.

The collection module 4 is configured to send collected current information of each heating circuit, state information of the alternating-current contactor and state information of a circuit breaker to the control module 3.

The control module 3 is further configured to send response information of the control module, the current information of each heating circuit, the state information of the alternating-current contactor, and the state information of the circuit breaker to the control terminal 1 for display via the communication module 2.

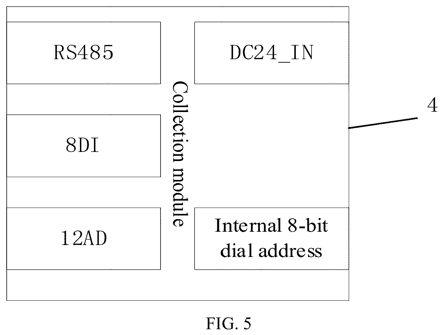

As shown in FIG. 5, for example, the collection module 4 includes a fourth RS485 interface, a DC24V input interface, eight second DI interfaces, twelve third AD interfaces, and two 0-1 dial switches. The collection module 4 is provided with an 8-bit rotary dial address-setting function, which allows the configuration of an address of the collection module 4. For example, an address of 1 for the collection module 4 represents a first collection module 4, and an address of 2 for the collection module 4 represents a second collection module 4. The control module 3 can read the address of the collection module 4 to determine which collection module 4 it is. The eight second DI interfaces are configured to collect state information of the alternating-current contactors and state information of the circuit breaker.

To collect alternating-current and direct-current information and maintain signal stability, two 0-1 dial switches are disposed in the collection module 4. One dial switch controls collection of a DC or an AC. For example, a Hall sensor generally outputs the DC, and a current transmitter generally outputs the AC. The other dial switch selects whether to configure a 120-ohm resistor for RS485, thereby preventing signal reflection, and improving signal quality.

The twelve third AD interfaces are connected to Hall sensors or current transmitters to collect current information of the twelve heating circuits. After collecting the state information of the alternating-current contactor in the heating circuit, the state information of the circuit breaker, and the current information of the heating circuit, the collection module 4 transmits the information to the control module 3 via its built-in fourth RS485 interface. A rotary dial can be used to set a communication address of RS485. The plurality of collection modules 4 can also be connected to the second RS485 interface of the control module 3 via the fourth RS485 interface, thereby meeting expansion requirements of the collection modules 4.

The fourth RS485 interface is configured to send the current information of the twelve heating circuits, the state information of the alternating-current contactors, and the state information of the circuit breaker to the control module 3.

In the present disclosure, the control modules 3 enable the number of the drivers for the circuit breakers and the alternating-current contactors to be increased to twelve, each control module 3 is connected to the three collection modules 4, and each collection module 4 collects the current information of the twelve heating circuits via the twelve AD interfaces, thereby enabling collection of currents of thirty-six heating circuits, which can meet the requirements of most station yards.

The present disclosure is compatible with existing standard switch snow-melting hardware systems by changing built-in dial addresses, thus simplifying replacement of modules. The communication module 2 is provided with a dial switch, which can control data transmission between the control terminal 1 and the communication module 2 via the RS232 or TCP/IP protocol to achieve compatibility of the communication module 2. In the control module 3, conversion of programs and underlying circuits for the self-contained system, a first existing system requiring compatibility, a second existing system requiring compatibility, and a third existing system is accomplished by changing settings of a 19-bit switch type dial, thereby meeting compatibility requirements of the control module 3.

According to the present disclosure, in the collection module 4, conversion of the collected DC or AC is achieved by using a 0-1 switch type dial. By upgrading AVR single-chip microcomputers to the STM32 series single-chip microcomputers and adding interfaces such as CAN bus and RS485, the present disclosure simplifies the difficulty of system development and usage, and enhances the practicality and expandability of the hardware system. While enabling efficient development of product functions, the present disclosure not only shortens the time for system troubleshooting, but also lowers labor costs and improves the overall maintenance efficiency of the hardware system.

Based on the above switch snow-melting control system, the present disclosure further provides a switch snow-melting control method, including the following steps: receiving, by a communication module 2, a command sent by a control terminal 1 to a control module 3, and sending the command to the control module 3; controlling, by the control module 3, an alternating-current contactor in each heating circuit and a circuit breaker based on the received command to control activation and deactivation of an electric heating strip; and sending, by the collection module 4, collected current information of each heating circuit, state information of the alternating-current contactor and state information of the circuit breaker to the control module 3.

The switch snow-melting control system and method in the present disclosure are compatible with all functions of control modules 3 in three existing switch snow-melting systems. When an existing module fails, the control system in the present disclosure can be replaced to meet original functional requirements, thus gradually replacing the three existing modules, improving troubleshooting efficiency, and saving labor and time costs.

The present disclosure is an extension based on the prior art, which ensures high timeliness and reliability of data access, while achieving the required compatibility and expandable function of the switch snow-melting system, and reducing the complexity of equipment usage. Meanwhile, existing on-site cables and original cabinet internal space are utilized to the greatest extent, thereby reducing project construction costs, and facilitating transformation and upgrade of existing on-site equipment.

While the present disclosure has been described in detail with reference to the foregoing embodiments, it should be understood by those of ordinary skill in the art that they may still perform modifications on the technical solutions described in the foregoing embodiments or perform equivalent substitutions on part of the technical features therein; and these modifications or substitutions do not make the essence of the corresponding technical solutions depart from the spirit and scope of the technical solutions in the embodiments of the present disclosure.

## Claims

1. A switch snow-melting control system, **characterized by** comprising a communication module, a control module, and a collection module,
wherein the control module is provided with a CAN interface for information transmission and relay between a plurality of control modules, and the control module is connected to a plurality of collection modules;
the communication module is configured to receive a command sent by a control terminal to the control module, and send the command to the control module; the communication module comprises a dial switch for switching a communication protocol between the control terminal and the communication module;
the control module is configured to control an alternating-current contactor in each heating circuit based on the received command to control activation and deactivation of an electric heating strip; and
the collection module is configured to send collected current information of each heating circuit, state information of the alternating-current contactor and state information of a circuit breaker to the control module.

2. The switch snow-melting control system according to claim 1, **characterized in that** the communication module further comprises a first RS232 interface, a remote RS232 interface, a first DS18B20 interface, a first CAN interface, and a TCP/IP interface,
wherein the communication module is connected to the control terminal via the first RS232 interface, the remote RS232 interface, or the TCP/IP interface, the first DS18B20 interface is configured to transmit an internal temperature signal from a control cabinet, which is sent by the control module, back to the control terminal, the first CAN interface is connected to the control module, and the communication module sends the command from the control terminal to the control module via the first CAN interface.

3. The switch snow-melting control system according to claim 1, **characterized in that** the control module is configured with a rotary dial address-setting function, and the dial switch is used to set address information of the control module and configure a CAN bus.

4. The switch snow-melting control system according to claim 1, **characterized in that** the control module comprises a second CAN interface, a third CAN interface, twelve DO interfaces, a second DS18B20 interface, a third DS18B20 interface, a second RS485 interface, and a third RS485 interface,
wherein the second CAN interface is configured to receive the command sent by the control terminal to the control module from the communication module; the third CAN interface is configured to perform information transmission and relay between the plurality of control modules; the twelve second DO interfaces are configured to control alternating-current contactors in twelve heating circuits; the second DS18B20 interface is externally connected to a track temperature transmitter and is configured to monitor a track temperature; the third DS18B20 interface is connected to a track temperature sensor and is configured to detect an internal temperature of the control cabinet; the second RS485 interface is connected to the plurality of collection modules; and the third RS485 interface is connected to an external electric meter and is configured to collect a three-phase current and a three-phase voltage and display the three-phase current and the three-phase voltage in the control cabinet.

5. The switch snow-melting control system according to claim 4, **characterized in that** the control module further comprises four first DI interfaces, two first DO interfaces, three first AD interfaces, and four second AD interfaces,
wherein the four first DI interfaces are configured to collect states of access control and three-position control switches; the two first DO interfaces are configured to implement a display function of an indicator light for the control module; the three first AD interfaces are configured to collect a current/voltage; and the four second AD interfaces are configured to collect the three-phase voltage, a DI state determined in a resistance simulation network, and temperatures of two 4-20 mA temperature sensors.

6. The switch snow-melting control system according to claim 5, **characterized in that** the control module further comprises an AC220 power input interface and a 24 V voltage output interface,
wherein the control module converts a 220 V AC voltage input from the AC220 power input interface into a 24 V voltage and outputs the 24 V voltage externally via the 24 V voltage output interface.

7. The switch snow-melting control system according to claim 4, **characterized in that** the collection module comprises a fourth RS485 interface, eight second DI interfaces, and twelve third AD interfaces,
wherein the eight second DI interfaces are configured to collect state information of the alternating-current contactors and state information of circuit breakers;
the twelve third AD interfaces are connected to Hall sensors or current transmitters to collect current information of the twelve heating circuits; and
the plurality of collection modules are also capable of being connected to the second RS485 interface of the control module via the fourth RS485 interface, and the fourth RS485 interface is configured to send the current information of the twelve heating circuits, the state information of the alternating-current contactors, and the state information of the circuit breakers to the control module.

8. The switch snow-melting control system according to claim 7, **characterized in that** the collection module further comprises two 0-1 dial switches, and the collection module is configured with an 8-bit rotary dial address-setting function.

9. The switch snow-melting control system according to claim 1, **characterized in that** the control module is further configured to collect an internal temperature of a control cabinet, a three-phase current, a three-phase voltage, and a track temperature, and send the control cabinet, the three-phase current, the three-phase voltage, and the track temperature to the control terminal for display via the communication module; and
the control module is further configured to send response information of the control module, the current information of each heating circuit, the state information of the alternating-current contactor, and the state information of the circuit breaker to the control terminal for display via the communication module.

10. The switch snow-melting control system according to any one of claims 1 to 9, **characterized in that** the communication module, the control module, and the collection module all adopt STM32 single-chip microcomputers.

11. A switch snow-melting control method, **characterized by** comprising the following steps:
receiving, by a communication module, a command sent by a control terminal to a control module, and sending the command to the control module, wherein the communication module comprises a dial switch for switching a communication protocol between the control terminal and the communication module;
controlling, by the control module, an alternating-current contactor in each heating circuit based on the received command to control activation and deactivation of an electric heating strip; and
sending, by the collection module, collected current information of each heating circuit, state information of the alternating-current contactor and state information of a circuit breaker to the control module,
wherein the control module is provided with a CAN interface for information transmission and relay between a plurality of control modules, and the control module is connected to a plurality of collection modules.
